(19) Europäisches Patentamt
European Patent Office
Office européen des brevets

(11) **EP 3 734 337 A1**

(12) **EUROPEAN PATENT APPLICATION**
published in accordance with Art. 153(4) EPC

(43) Date of publication:
**04.11.2020 Bulletin 2020/45**

(51) Int Cl.:
**G02B 6/036** (2006.01)  **G02B 6/02** (2006.01)
**H01S 3/067** (2006.01)

(21) Application number: **18893577.9**

(22) Date of filing: **27.12.2018**

(86) International application number:
**PCT/JP2018/048371**

(87) International publication number:
**WO 2019/131971 (04.07.2019 Gazette 2019/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.12.2017 JP 2017254365**

(71) Applicant: **Fujikura, Ltd.**
**Tokyo 135-8512 (JP)**

(72) Inventors:
• **KITAHARA Rintaro**
**Sakura-shi, Chiba 285-8550 (JP)**
• **KISHI Tatsuya**
**Sakura-shi, Chiba 285-8550 (JP)**

(74) Representative: **Plasseraud IP**
**66, rue de la Chaussée d'Antin**
**75440 Paris Cedex 09 (FR)**

(54) **OPTICAL FIBER AND LASER DEVICE**

(57)  An optical fiber in which light having at least a wavelength of 1060 nm is capable of propagating in a core at least in an LP01 mode and an LP11 mode, wherein a difference $\Delta\beta$ between a propagation constant of the light in the LP01 mode and a propagation constant of the light in the LP11 mode is 2000 rad/m or smaller, and, when a deterioration amount of beam quality of light indicated by $M^2$ due to propagation in the optical fiber is represented as $\Delta M^2$, length L satisfies the following expression.

$$L \leqq \frac{\Delta M^2}{-2.372 \times 10^{-6} \times \Delta\beta + 4.819 \times 10^{-3}}$$

FIG. 2

**Description**

Technical Field

The present invention relates to an optical fiber and a laser device using the optical fiber that can suppress deterioration in beam quality to a desired range while suppressing stimulated Raman scattering.

Background Art

A fiber laser device is used in various field such as a laser machining field and a medical field because the fiber laser device is excellent in light condensing performance, has high power density, and can obtain light that becomes a small beam spot. In such a fiber laser device, power of emitted light is increased. However, when power density of light in an optical fiber increases, wavelength conversion of the light due to the stimulated Raman scattering easily occurs and light having an unintended wavelength is sometimes emitted. In this case, the light reflected on a workpiece or the like returns to the fiber laser device again and is amplified. Consequently, in some case, the amplitude of light have a wavelength that should be amplified in design becomes unstable and an output becomes unstable.

Examples of a method of suppressing the stimulated Raman scattering in the optical fiber include a method of increasing an effective sectional area of light propagating in a core. Examples of a method of increasing the effective sectional area include a method of increasing the diameter of the core and a method of reducing a relative refractive index difference of the core with respect to a clad. When the diameter of the core is increased, since light confining power of the core increases, the optical fiber bends to be converted into a multimode. Therefore, examples of a method of suppressing the light confining power of the core include a method of reducing the relative refractive index difference of the core with respect to the clad. However, when the relative refractive index difference of the core with respect to the clad is reduced, the light propagating in the core is easily affected by a macro bend and a micro bend. Accordingly, it is requested to adjust the relative refractive index difference of the core with respect to the clad while properly increasing the diameter of the core.

However, even when the core is designed as explained above, there is a limit in the size of an effective sectional area of light in an LP01 mode when it is attempted to propagate the light in a single mode. Therefore, it is attempted to increase the effective sectional area of the light in the LP01 mode by configuring a fiber laser device using an optical fiber including a core capable of propagating light in a few mode like an optical fiber described in Patent Literature 1 described below.

[Patent Literature 1] JP2016-51859 A

Summary of Invention

In a fiber laser device, it is preferable that beam quality of emitted light is excellent from, for example, the viewpoint of light condensing performance. Accordingly, there is a demand for suppressing light in a mode other than a basic mode from being excited even when the effective sectional area of the light in the LP01 mode is increased by using the optical fiber including the core capable of propagating light in the few mode as explained above. Note that the beam quality is indicated by, for example, $M^2$ (M square).

Therefore, an object of the present invention is to provide an optical fiber and a laser device using the optical fiber that can suppress deterioration in beam quality to a desired range while suppressing stimulated Raman scattering.

In order to solve the problems described above, the present invention is an optical fiber in which light having at least a wavelength of 1060 nm is capable of propagating in a core at least in an LP01 mode and an LP11 mode, wherein a difference $\Delta\beta$ between a propagation constant of the light in the LP01 mode and a propagation constant of the light in the LP11 mode is 2000 rad/m or smaller and, when a deterioration amount of beam quality of light indicated by $M^2$ due to propagation in the optical fiber is represented as $\Delta M^2$, length L satisfies an expression described below.

$$L \leqq \frac{\Delta M^2}{-2.372 \times 10^{-6} \times \Delta\beta + 4.819 \times 10^{-3}}$$

The light having at least the wavelength of 1060 nm propagates in the core at least in the LP01 mode and the LP11 mode and the difference between the propagation constant of the light in the LP01 mode and the propagation constant of the light in the LP11 mode is set to 2000 rad/m or smaller. Therefore, compared with a single-mode fiber, it is possible to increase an effective sectional area of the light in the LP01 mode. Accordingly, it is possible to suppress the stimulated Raman scattering. The present inventors have found that, when the length L of the optical fiber satisfies the above expression, beam quality of emitted light can be suppressed to a desired deterioration amount $\Delta M^2$ or less.

Specifically, the present inventors have found that deterioration in beam quality due to inter-mode combination of light is proportional to the length of the optical fiber and that, when the difference $\Delta\beta$ between the propagation constant of the light in the LP01 mode and the propagation constant of the light in the LP11 mode is 2000 rad/m or smaller, a proportional constant between deterioration in beam quality and the length of the optical fiber is proportional to the propagation constant difference $\Delta\beta$. Based on this finding, the present inventors have obtained the conclusion that, when the length L of the optical fiber satisfies the condition described above, a deterioration amount of beam quality due to a shift of the light in the LP01 mode to the LP11 mode can be suppressed to $\Delta M^2$ or less. Therefore, with the optical fiber of the present invention, it is possible to suppress deterioration in beam quality to a desired range while suppressing stimulated Raman scattering.

It is preferable that the deterioration amount $\Delta M^2$ is 0.05 or less. It is more preferable that the deterioration amount $\Delta M^2$ is 0.03 or less.

Since the deterioration amount $\Delta M^2$ of the beam quality $M^2$ due to the propagation in the optical fiber is 0.05 or less, it is possible to emit light excellent in light condensing performance. Since the deterioration amount $\Delta M^2$ is 0.03 or less, it is possible to emit light more excellent in the light condensing performance.

It is preferable that the length L is 50 m or less.

The length L satisfying the expression described above sometimes exceeds 50 m depending on the difference $\Delta\beta$ between the propagation constant of the light in the LP01 mode and the propagation constant of the light in the LP11 mode. Therefore, even when the propagation constant difference $\Delta\beta$ is a relatively large value, since a maximum of the length L is suppressed to 50 m, it is possible to further suppress the stimulated Raman scattering.

It is preferable that at least ytterbium is added to the core.

When at least ytterbium is added to the core to form an amplification optical fiber, since the amplification optical fiber is used, it is possible to configure a fiber laser device that emits light having at least a wavelength of 1060 nm. Therefore, since such an amplification optical fiber is used, it is possible to configure the fiber laser device that can suppress deterioration in beam quality while suppressing the stimulated Raman scattering.

In order to solve the problems described above, the present invention is a laser device including the optical fiber described in any one of the above descriptions.

With the optical fiber included in the laser device, as explained above, it is possible to suppress deterioration in beam quality to a desired range while suppressing stimulated Raman scattering. Therefore, with such a laser device, compared with a laser device in which only an optical fiber not satisfying the above expression is used, it is possible to emit light with a suppressed wavelength shift and deterioration in beam quality suppressed to the desired range.

As explained above, according to the present invention, there is provided an optical fiber and a laser device using the optical fiber that can suppress deterioration in beam quality to a desired range while suppressing stimulated Raman scattering.

Brief Description of Drawings

FIG. 1 is a diagram illustrating a laser device according to a first embodiment of the present invention.

FIG. 2 is a diagram illustrating a state of a cross section perpendicular to the longitudinal direction of an amplification optical fiber.

FIG. 3 is a diagram illustrating a state of a cross section perpendicular to the longitudinal direction of a first optical fiber.

FIG. 4 is a simulation diagram illustrating a relation between an effective sectional area of light in an LP01 mode propagating in an optical fiber and the difference between a propagation constant of the light in the LP01 mode and a propagation constant of light in an LP11 mode.

FIG. 5 is a diagram of measurement values illustrating the relation between the effective sectional area of the light in the LP01 mode propagating in the optical fiber and the difference between the propagation constant of the light in the LP01 mode and the propagation constant of light in an LP11 mode.

FIG. 6 is a diagram of measurement values illustrating a relation between a propagation constant difference $\Delta\beta$ between the light in the LP01 mode and the light in the LP11 mode and a deterioration amount $\Delta M^2$ of beam quality $M^2$ due to propagation in the optical fiber.

FIG. 7 is a diagram illustrating, for each difference between the propagation constant of the light in the LP01 mode and the propagation constant of the light in the LP11 mode, a relation between the diameter of a core and a relative refractive index difference of the core with respect to a clad.

FIG. 8 is a diagram of measurement values illustrating a relation between length L of an optical fiber in which a propagation constant difference $\Delta\beta$ between the light in the LP01 mode and the light in the LP11 mode is 1734 rad/m and the difference between beam quality $M^2$ of light made incident on the optical fiber and beam quality $M^2$ of emitted light.

FIG. 9 is a diagram illustrating a relation between a difference $\Delta\beta$ of a propagation constant and a ratio $\Delta M^2/L$ illustrated in Table 1.

FIG. 10 is a diagram illustrating a laser device according to a second embodiment of the present invention.

FIG. 11 is a diagram illustrating a laser device according to a third embodiment of the present invention.

Description of Embodiments

Preferred embodiments of an optical fiber and a laser device according to the present invention are explained in detail below with reference to the drawings. The embodiments illustrated below are for facilitating understanding of the present invention and are not for limitedly interpreting the present invention. The present invention can be changed and improved without departing from the gist of the present invention. Note that, for easiness of understanding, scales of the figures and scales described in the following explanation are sometimes different.

(First Embodiment)

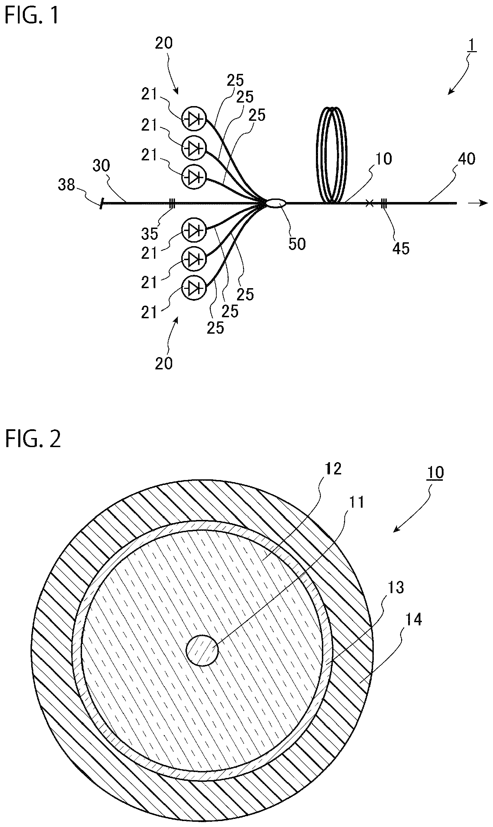

FIG. 1 is a diagram illustrating a laser device according to an embodiment. As illustrated in FIG. 1, a laser device 1 in this embodiment is a resonator-type fiber laser device. The laser device 1 includes, as main components, an amplification optical fiber 10, a pumping light source 20, a first optical fiber 30, a first FBG 35 provided in the first optical fiber 30, a second optical fiber 40, a second FBG 45 provided in the second optical fiber 40, and an optical combiner 50.

FIG. 2 is a sectional view illustrating the structure of a cross section of the amplification optical fiber 10 illustrated in FIG. 1. As illustrated in FIG. 2, the amplification optical fiber 10 is formed in a so-called double clad structure including, as main components, a core 11, an inner clad 12 surrounding the outer circumferential surface of the core 11 without a gap, an outer clad 13 coating the outer circumferential surface of the inner clad 12, and a coating layer 14 coating the outer clad 13. A refractive index of the inner clad 12 is set lower than a refractive index of the core 11. A refractive index of the outer clad 13 is set lower than the refractive index of the inner clad 12.

The core 11 is made of, for example, quartz added with a dopant such as germanium (Ge) for increasing a refractive index or quartz not added with the dopant for increasing a refractive index. Further, the core 11 is added with at least ytterbium (Yb) pumped by pumping light emitted from the pumping light source 20 as a dopant for amplifying light as explained below. When a refractive index of the core 11 is higher than a refractive index of quartz added with no dopant, the inner clad 12 is made of, for example, the quartz added with no dopant or quartz added with a dopant such as fluorine (F) for reducing a refractive index. When the refractive index of the core 11 is the same as or lower than the refractive index of the quartz added with no dopant, the inner clad 12 is made of the quartz added with the dopant such as fluorine (F) for reducing a refractive index. The outer clad 13 is made of resin or quartz. Examples of the resin include ultraviolet curing resin. Examples of the quartz include quartz added with a dopant such as fluorine (F) for reducing a refractive index to be lower than the refractive index of the inner clad 12. Examples of a material forming the coating layer 14 include ultraviolet curing resin. When the outer clad 13 is made of resin, the ultraviolet curing resin is ultraviolet curing resin different from the resin forming the outer clad.

The amplification optical fiber 10 is a few-mode fiber. When light having at least a wavelength of 1060 nm propagates in the core 11, as the light, light in a high-order mode equal to or higher than a secondary LP mode propagates other than light in an LP01 mode, which is a basic mode. Examples of the light in the high-order mode include light in an LP11 mode, light in an LP21 mode, and light in an LP02 mode.

The pumping light source 20 is configured from a plurality of laser diodes 21. In this embodiment, the laser diodes 21 are Fabry-Perrot semiconductor lasers including GaAs semiconductor as a material and emit pumping lights having a center wavelength of 915 nm, for example. The laser diodes 21 of the pumping light source 20 are connected to respective optical fibers 25. The pumping lights emitted from the laser diodes 21 propagate in the optical fibers 25 as, for example, multi-mode light.

The optical fibers 25 are each connected to one end of the amplification optical fiber 10 in the optical combiner 50. Specifically, cores of the optical fibers 25 and the inner clad 12 of the amplification optical fiber 10 are connected such that the cores of the optical fibers 25 are optically combined with the inner clad 12 of the amplification optical fiber 10. Therefore, the pumping lights emitted by the laser diodes 21 are made incident on the inner clad 12 of the amplification optical fiber 10 via the respective optical fibers 25 and propagate mainly in the inner clad 12.

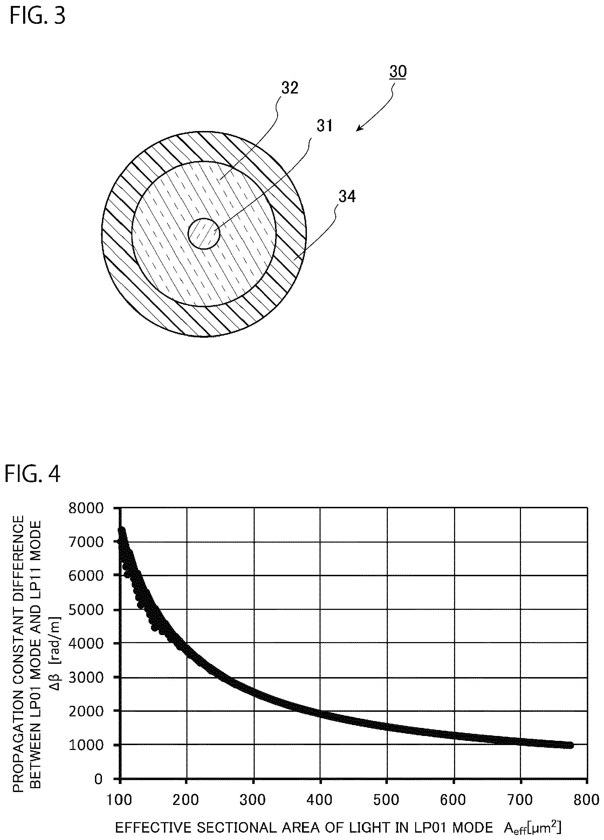

FIG. 3 is a diagram illustrating a state of the first optical fiber 30. The first optical fiber 30 includes, as main components, a core 31, a clad 32 surrounding the outer circumferential surface of the core 31 without a gap, and a coating layer 34 coating the clad 32. The configuration of the core 31 is, for example, set the same as the configuration of the core 11 of the amplification optical fiber 10 except that a rare earth element such as ytterbium is not added. The diameter of the core 31 is set, for example, the same as the diameter of the core 11. The clad 32 is configured, for example, the same as the inner clad 12 except that the diameter of the clad 32 is smaller than the diameter of the inner clad 12 of the amplification optical fiber 10. The coating layer 34 is configured, for example, the same as the configuration of the coating layer 14 of the amplification optical fiber 10.

The first optical fiber 30 is connected to one end of the amplification optical fiber 10 together with the optical fibers 25 in the optical combiner 50. Specifically, the core 11 of the amplification optical fiber 10 and the core 31 of the first optical fiber 30 are connected such that the core 31 of the first optical fiber 30 is optically combined with the core 11 of the amplification optical fiber 10. The first optical fiber 30 is a few-mode fiber and propagates light same as the light propagated by the core 11 of the amplification optical fiber 10. Therefore, lights in the individual LP modes propagating in the core 11 of the amplification optical fiber 10 can directly propagate in the core 31 of the first optical fiber 30.

A photosensitive element such as germanium is added to the core 31 of the first optical fiber 30. This photosensitivity is a characteristic that a refractive index changes when light having a predetermined wavelength is irradiated. The characteristic is used and the first FBG 35 is provided in the core 31 of the first optical fiber 30. In this way, the first FBG 35 is disposed on one side of the amplification optical fiber 10 and is optically combined with the core 11 of the amplification optical fiber 10. In the first FBG 35, a high refractive index portion where a refractive index is higher than a refractive index of portions other than the first FBG 35 of the core 31 and a low refractive index portion where a refractive index is the same as the refractive index of the portions other than the first FBG 35 of the core 31 are cyclically repeated along the longitudinal direction of the core 31. This repetition pattern of the high refractive index portion is formed by, for example, irradiating an ultraviolet ray on a part to be formed as the high refractive index portion. The first FBG 35 formed in this way is configured to reflect light including at least a wavelength of 1060 nm in light emitted in a state in which ytterbium added to the core 11 of the amplification optical fiber 10 is changed to a pumped state. The reflectance of the first FBG 35 is higher than the reflectance of the second FBG 45 explained below. The first FBG 35 reflects, for example, at 99% or more, the light having the wavelength of 1060 nm in the light emitted by the ytterbium.

Note that a terminal section 38 that converts light into heat is provided on the opposite side of a side of the first optical fiber 30 connected to the amplification optical fiber 10.

In the second optical fiber 40, the diameter of a clad is the same as the diameter of the inner clad 12 of the amplification optical fiber 10. The second optical fiber 40 is configured the same as the amplification optical fiber 10 except that a dopant for amplifying light is not added to a core. Therefore, the second optical fiber 40 is the same few-mode fiber as the amplification optical fiber 10. The second optical fiber 40 can propagate the same light as the light propagated by the core 11 of the amplification optical fiber 10. The second optical fiber 40 is connected such that the core 11 of the amplification optical fiber 10 and the core of the second optical fiber 40 are optically combined at the other end of the amplification optical fiber 10. Therefore, light in a few mode propagating in the core 11 of the amplification optical fiber 10 propagates in the core of the second optical fiber 40 while keeping the few mode.

The second FBG 45 is provided in the core of the second optical fiber 40. In this way, the second FBG 45 is disposed on the other side of the amplification optical fiber 10 and optically combined with the core 11 of the amplification optical fiber 10. In the second FBG 45, as in the first FBG 35, a high refractive index portion and a low refractive index portion are cyclically repeated and formed. The second FBG 45 is configured to reflect, at reflectance lower than the reflectance of the first FBG 35, the light including the wavelength of 1060 nm reflected by the first FBG 35. When the light reflected by the first FBG 35 is made incident on the second FBG 45, the second FBG 45 reflects the light at reflectance of, for example, approximately 10%. In this way, a resonator is formed by the first FBG 35, the amplification optical fiber 10, and the second FBG 45. In this embodiment, nothing is connected, in particular, to the other end on the opposite side of the amplification optical fiber side of the second optical fiber 40. However, a glass rod or the like may be connected to the other end.

Next, the operation of the laser device 1 is explained.

First, pumping lights are emitted from the respective laser diodes 21 of the pumping light source 20. The pumping lights are made incident on the inner clad 12 of the amplification optical fiber 10 via the optical fibers 25 and propagate mainly in the inner clad 12. The pumping lights propagating in the inner clad 12 pump the ytterbium added to the core 11 when passing through the core 11. The ytterbium changed to a pumped state emits natural emission light in a specific wavelength band. Starting from this natural emission light, the light including the wavelength of 1060 nm reflected in common on the first FBG 35 and the second FBG 45 resonates between the first FBG 35 and the second FBG 45. When the resonating light propagates in the core 11 of the amplification optical fiber 10, the ytterbium in the pumped state causes stimulated emission and the resonating light is amplified. A part of the resonating light is transmitted through the second FBG 45 and emitted from the second optical fiber 40. The laser device 1 changes to a laser oscillation state when a gain and a loss in the resonator including the first FBG 35, the amplification optical fiber 10, and the second FBG 45 are equal. Light having fixed power is emitted from the second optical fiber 40.

Note that most of the light transmitted through the first FBG 35 from the amplification optical fiber 10 side is converted into heat by the terminal section 38 and disappears.

Incidentally, as explained above, the amplification optical fiber 10, the first optical fiber 30, and the second optical fiber 40 are each a few-mode fiber. Therefore, the light resonating between the first FBG 35 and the second FBG 45 and the light transmitted through the second FBG 45 include, besides the light in the basic mode, lights in several high-order modes equal to or higher than the secondary LP mode. Besides the light in the basic mode, the lights in the several high-order modes equal to or higher than the secondary LP mode propagate in the second optical fiber 40 and are emitted from the laser device 1. However, as explained below, in the amplification optical fiber 10, the first optical fiber 30, and the second optical fiber 40, propagation in high-order modes equal to or high than the LP02 mode is reduced. Energy of lights in the LP02 mode or higher modes propagating in the amplification optical fiber 10, the first optical fiber 30, and the second optical fiber 40 is reduced.

A propagation constant of light propagating in a core of an optical fiber is explained. Note that, in the following explanation, when a clad is referred to, the clad means the clad 32 of the first optical fiber 30, the clad of the second optical fiber 40, or the inner clad 12 of the amplification optical fiber 10. The propagation constant is a constant concerning phase fluctuation in the case in which a light wave propagates. Since light is a wave, when the amplitude of the light is represented as A and the distance from the center of the core is represented as z, an electric field E in the core is indicated by Expression (1) described below.

$$E = A\exp[-(\alpha + i\beta)z] \qquad \cdots (1)$$

Note that $\alpha$ is an extinction coefficient indicating extinction of the wave, $\beta$ is a propagation constant indicating propagation of the wave, and i is an imaginary number unit. The above Expression (1) can be described for each of the lights in the individual modes propagating in the core. The light in the LP01 mode and the light in the LP11 mode have extinction coefficients $\alpha$ different from each other and have propagation constants $\beta$ different from each other. Since the propagation constant $\beta$ indicate the propagation of the wave, specifying the propagation constant $\beta$ of the light propagating in the core is specifying an effective refractive index $n_{eff}$ of the light propagating in the core. When the wavelength of the light propagating in the core is represented as $\lambda$, the effective refractive index $n_{eff}$ can be indicated by Expression (2) described below.

$$n_{eff} = \lambda\beta/2\pi \qquad \cdots (2)$$

Incidentally, an effective sectional area $A_{eff}$ of the light propagating in the core of the optical fiber is a value correlating to the effective refractive index $n_{eff}$ of the light. Therefore, the effective sectional area $A_{eff}$ is considered to be a value correlating to the propagation constant $\beta$ of the light.

Next, when the difference between a propagation constant of the light in the LP01 mode and a propagation constant of the light in the LP11 mode propagating in the core is represented as $\Delta\beta$, the propagation constant difference $\Delta\beta$ also correlates with the effective sectional area $A_{eff}$.

FIG. 4 is a simulation diagram illustrating a relation between the effective sectional area of the light in the LP01 mode having the wavelength of 1060 nm propagating in the optical fiber and the propagation constant difference $\Delta\beta$ between the light in the LP01 mode and the light in the LP11 mode. In the simulation in FIG. 4, a refractive index profile of the core was a refractive index profile fixed in a radial direction, that is, stepwise. In the simulation, the diameter of the core was changed from 10 $\mu$m to 40 $\mu$m at a 1 $\mu$m interval and a relative refractive index difference of the core with respect to the clad was changed from 0.1% to 0.2% at a 0.005% interval. From FIG. 4, it is seen that the propagation constant difference $\Delta\beta$ correlates with the effective sectional area $A_{eff}$ of the light in the LP01 mode as explained above. From FIG. 4, if the propagation constant difference $\Delta\beta$ is 4000 rad/m or smaller, the effective sectional area of the light in the LP01 mode can be increased to 191 $\mu$m$^2$ or larger. If the effective sectional area of the light in the LP01 mode is 191 $\mu$m$^2$ or larger, it is possible to reduce energy density of the light and suppress the stimulated Raman scattering from occurring. If the propagation constant difference $\Delta\beta$ is 2500 rad/m or smaller, the effective sectional area of the light in the LP01 mode can be increased to 300 $\mu$m$^2$ or larger. If the effective sectional area of the light in the LP01 mode is 300 $\mu$m$^2$ or larger, it is possible to further reduce energy density of the light and further suppress the stimulated Raman scattering from occurring.

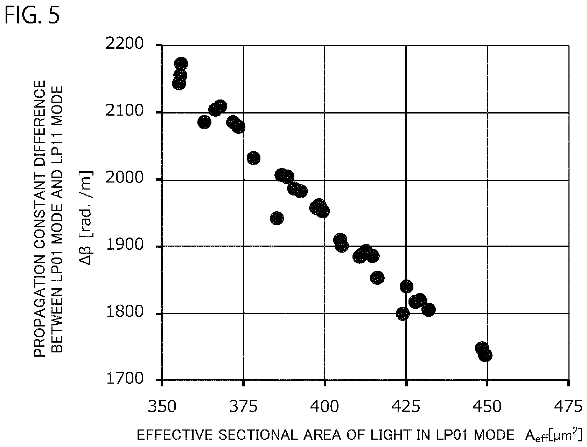

FIG. 5 is a diagram of measurement values indicating a relation between the effective sectional area of the light in the LP01 mode having the wavelength of 1060 nm propagating in the optical fiber and the propagation constant difference $\Delta\beta$ between the light in the LP01 mode and the light in the LP11 mode. In the measured optical fiber, the refractive index profile of the core is stepwise, the diameter of the core is 28 $\mu$m, and the relative refractive index difference of the core with respect to the clad is 0.12%. Theoretically, lights in the LP01 mode, the LP11 mode, the LP21 mode, the LP02 mode, an LP31 mode, and an LP12 mode are capable of propagating in the optical fiber at the wavelength of 1060 nm. In the measurement values illustrated in FIG. 5, it is also seen that the propagation constant difference $\Delta\beta$ correlates with the effective sectional area $A_{eff}$ of the light in the LP01 mode as explained above. From FIG. 4 and FIG. 5, if the propagation constant difference $\Delta\beta$ is smaller than 2000 rad/m, the effective sectional area of the light in the LP01 mode can be increased to 390 $\mu$m² or larger. If the effective sectional area of the light in the LP01 mode is 390 $\mu$m² or larger, it is possible to further reduce the energy density of the light and further suppress the stimulated Raman scattering from occurring. If the propagation constant difference $\Delta\beta$ is smaller than 1850 rad/m, the effective sectional area of the light in the LP01 mode can be increased to larger than 420 $\mu$m². If the effective sectional area of the light in the LP01 mode is larger than 420 $\mu$m², it is possible to further reduce the energy density of the light and further suppress the stimulated Raman scattering from occurring.

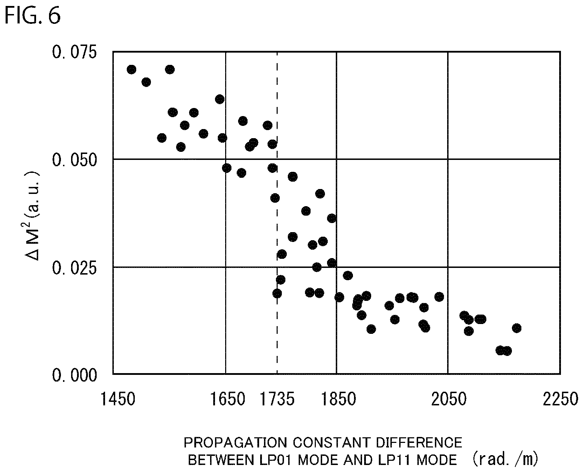

Next, a relation between the propagation constant difference $\Delta\beta$ between the light in the LP01 mode and the light in the LP11 mode and beam quality of light emitted from the optical fiber is explained. FIG. 6 is a diagram of measurement values illustrating a relation between the propagation constant difference $\Delta\beta$ between the light in the LP01 mode and the light in the LP11 mode and a deterioration amount $\Delta M^2$ of beam quality $M^2$ due to propagation in the optical fiber. Measurement in FIG. 6 was performed by, using the optical fiber used in FIG. 5, making the light in the basic mode incident from one end of the optical fiber and measuring $M^2$ of light emitted from the other end. Note that the length of this optical fiber is 55 m. The beam quality tends to be deteriorated when the light is made incident on the optical fiber as explained below. A deterioration amount of the beam quality in making the light incident on the optical fiber is subtracted from the measurement value to calculate the deterioration amount $\Delta M^2$ of the beam quality $M^2$ due to the propagation in the optical fiber. In FIG. 6, the deterioration amount $\Delta M^2$ of the beam quality $M^2$ is plotted on the vertical axis. $M^2$ of light including only the light in the basic mode is 1. A value of $M^2$ is larger as a higher-order mode is excited and the beam quality is further deteriorated. Therefore, a larger deterioration amount $\Delta M^2$ of the beam quality in FIG. 6 indicates that beam quality of emitted light is further deteriorated. As it is seen from FIG. 6, in this optical fiber, if the propagation constant difference $\Delta\beta$ between the light in the LP01 mode and the light in the LP11 mode is 1735 [rad/m] or more, the deterioration amount $\Delta M^2$ can be reduced to smaller than 0.05. Satisfactory beam quality can be obtained. If the deterioration amount $\Delta M^2$ is smaller than 0.05, the optical fiber used in the laser device can emit light having sufficiently satisfactory beam quality. In this way, from FIG. 6, it is seen that, if the propagation constant difference $\Delta\beta$ between the light in the LP01 mode and the light in the LP11 mode is 1735 [rad/m] or more, deterioration in beam quality of light emitted from the optical fiber is suppressed. Note that, in the optical fiber having this length, when the propagation constant difference $\Delta\beta$ is 1850 [rad/m] or more, the deterioration amount $\Delta M^2$ can be reduced to smaller than 0.025. The beam quality is more satisfactory. Therefore, it is seen that, if the propagation constant difference $\Delta\beta$ between the light in the LP01 mode and the light in the LP11 mode is 1850 [rad/m] or more, the deterioration in the beam quality of the light emitted from the optical fiber is further suppressed.

Next, a relation among the diameter of the core, a relative refractive index difference $\Delta n$ of the core with respect to the clad, and the propagation constant difference $\Delta\beta$ between the light in the LP01 mode and the light in the LP11 mode is explained. When the refractive index of the core is represented as $n_1$ and the refractive index of the clad is represented as $n_2$, the relative refractive index difference $\Delta n$ of the core with respect to the clad is indicated by Expression (3) described below.

$$\Delta n = (n_1{}^2 - n_2{}^2)/(2n_1{}^2) \qquad \cdot\cdot\cdot(3)$$

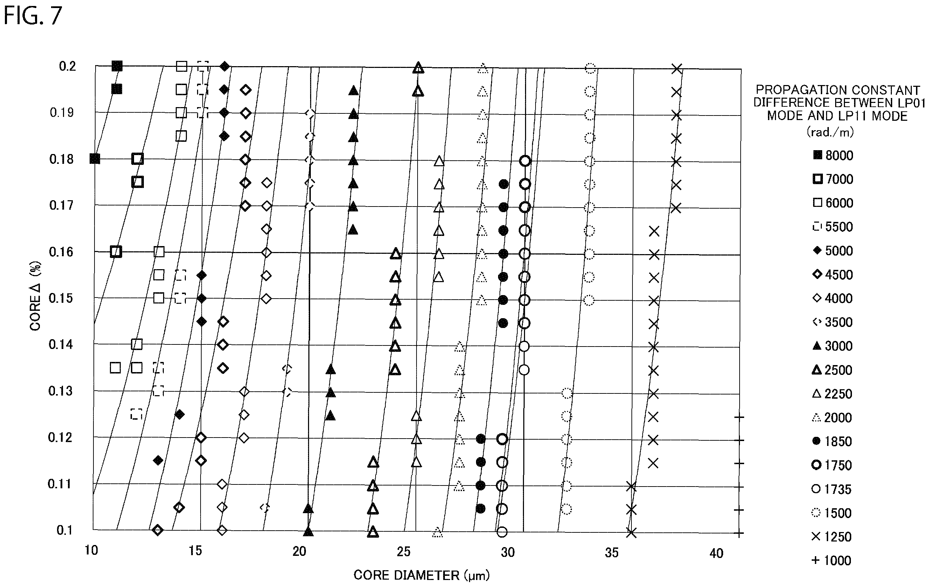

FIG. 7 is a diagram illustrating, for each propagation constant difference $\Delta\beta$ between the light in the LP01 mode and the light in the LP11 mode, in a simulation, a relation between the diameter of the core and the relative refractive index difference $\Delta n$ of the core with respect to the clad. Note that, in the figure as well, a refractive index profile of the core is fixed in the radial direction, that is, stepwise. As illustrated in FIG. 7, if the core diameter and the relative refractive index difference $\Delta n$ are satisfied to be present in a region further on the right side than any line indicating the propagation constant difference $\Delta\beta$ between the light in the LP01 mode and the light in the LP11 mode, it is considered possible to reduce a propagation constant difference to the propagation constant difference $\Delta\beta$ or less. As an example, as illustrated in FIG. 7, for example, when the relative refractive index difference $\Delta n$ is 0.10, if the diameter of the core is 16 $\mu$m or larger, the propagation constant difference $\Delta\beta$ can be reduced to 4000 rad/m or smaller. That is, when FIG. 4 is considered, if the diameter of the core is 16 $\mu$m or larger, the effective sectional area of the light in the LP01 mode can be increased to 191 $\mu$m² or larger. As illustrated in FIG. 7, it is seen that, for example, when the relative refractive index difference $\Delta n$ is 0.10, if the diameter of the core is 23 $\mu$m or larger, the propagation constant difference $\Delta\beta$ can be reduced to 2500 rad/m or smaller. When FIG. 4 is considered, if the diameter of the core is 23 $\mu$m or larger, the effective sectional area of the light in the LP01 mode can be increased to 300 $\mu$m² or larger. As illustrated in FIG. 7, it is seen that, for example, when the relative refractive index difference $\Delta n$ is 0.10, if the diameter of the core is 27.5 $\mu$m or larger, the propagation constant difference $\Delta\beta$ can be reduced to 2000 rad/m or smaller. That is, when FIGS. 4 and 5 are considered, if the diameter of the core is larger than 27.5 $\mu$m, the effective sectional area of the light in the LP01 mode can be increased to larger than 390 $\mu$m². As illustrated in FIG. 7, it is seen that, for example, when the relative refractive index difference $\Delta n$ is 0.10, if the diameter of the core is larger than 28 $\mu$m, the propagation constant difference $\Delta\beta$ can be reduced to smaller than 1850 rad/m. That is, when FIGS. 4 and 5 are considered, if the diameter of the core is larger than 28 $\mu$m, the effective sectional area of the light in the LP01 mode can be increased to larger than 420 $\mu$m$^2$.

As illustrated in FIG. 7, it is seen that, for example, when the relative refractive index difference $\Delta$n is 0.10, if the diameter of the core is 29.0 $\mu$m or smaller, the propagation constant difference $\Delta\beta$ can be increased to 1735 rad/m or larger. That is, in the optical fiber having the length used in FIG. 6, when FIG. 6 is considered, if the diameter of the core is 29.0 $\mu$m or smaller, the deterioration amount $\Delta M^2$ can be reduced to less than 0.05 and the deterioration in the beam quality of the light emitted from the optical fiber can be suppressed. Further, as illustrated in FIG. 7, it is seen that, if the diameter of the core is 28 $\mu$m or smaller, the propagation constant difference $\Delta\beta$ can be increased to 1850 rad/m or larger. That is, in the optical fiber having the length used in FIG. 6, when FIG. 6 is considered, if the diameter of the core is 28 $\mu$m or smaller, the deterioration amount $\Delta M^2$ can be reduced to less than 0.025 and the deterioration in the beam quality of the light emitted from the optical fiber can be further suppressed.

In this way, in the optical fiber that propagates the light having the wavelength of 1060 nm, if the propagation constant difference $\Delta\beta$ between the light in the LP01 mode and the light in the LP11 mode propagating in the optical fiber is 4000 rad/m or smaller, it is possible to suppress the stimulated Raman scattering from occurring. If the propagation constant difference $\Delta\beta$ is 2500 rad/m or smaller, it is possible to further suppress the stimulated Raman scattering from occurring. If the propagation constant difference $\Delta\beta$ is 2000 rad/m or smaller, it is possible to still further suppress the stimulated Raman scattering from occurring. If the propagation constant difference $\Delta\beta$ is smaller than 1850 rad/m, it is possible to yet still further suppress the stimulated Raman scattering from occurring. On the other hand, in the case of the length of the optical fiber used for explanation referring to FIG. 6, if the propagation constant difference $\Delta\beta$ between the light in the LP01 mode and the light in the LP11 mode propagating in the optical fiber is 1735 rad/m or larger, the deterioration in the beam quality of the light emitted from the optical fiber is suppressed. If the propagation constant difference $\Delta\beta$ is 1850 rad/m or larger, the deterioration in the beam quality of the light emitted from the optical fiber is further suppressed.

Therefore, in the laser device 1, if the propagation constant difference $\Delta\beta$ between the light in the LP01 mode and the light in the LP11 mode propagating in the amplification optical fiber 10, the first optical fiber 30, and the second optical fiber 40 is 4000 rad/m or smaller, it is possible to suppress the stimulated Raman scattering from occurring. If the propagation constant difference $\Delta\beta$ is 2500 rad/m or smaller, it is possible to further suppress the stimulated Raman scattering from occurring. If the propagation constant difference $\Delta\beta$ is 2000 rad/m or smaller, it is possible to still further suppress the stimulated Raman scattering from occurring. If the propagation constant difference $\Delta\beta$ is smaller than 1850 rad/m, it is possible to yet still further suppress the stimulated Raman scattering from occurring. On the other hand, when the amplification optical fiber 10, the first optical fiber 30, and the second optical fiber 40 respectively have the length of the optical fiber used for the explanation referring to FIG. 6, if the propagation constant difference $\Delta\beta$ between the light in the LP01 mode and the light in the LP11 mode propagating in the amplification optical fiber 10, the first optical fiber 30, and the second optical fiber 40 is 1735 rad/m or larger, the deterioration in the beam quality of the light is suppressed in the respective optical fibers. If the propagation constant difference $\Delta\beta$ is 1850 rad/m or larger, the deterioration in the beam quality of the light in the respective optical fibers is further suppressed. It is possible to suppress the deterioration in the beam quality of the beam emitted from the laser device 1.

Next, a relation between beam quality and the length of an optical fiber is explained.

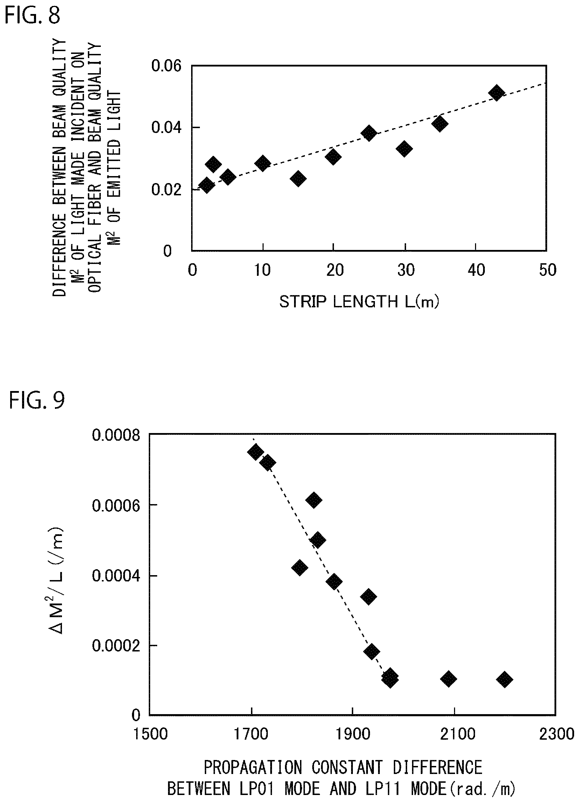

FIG. 8 is a diagram of measurement values illustrating a relation between length L of an optical fiber in which the propagation constant difference $\Delta\beta$ between the light in the LP01 mode and the light in the LP11 mode is 1734 rad/m and the difference between the beam quality $M^2$ of light made incident on the optical fiber and the beam quality $M^2$ of emitted light. A deterioration amount illustrated in FIG. 8 is a result obtained by reducing the length of the optical fiber from 43 m to 2m and measuring, at the respective lengths, a deterioration amount with the same method as the measurement of the deterioration amount in FIG. 6. Note that a difference in the beam quality illustrated in FIG. 6 is a sum of a deterioration amount at the time when light is made incident on the optical fiber and a deterioration amount of beam quality due to propagation of the light in the optical fiber. Therefore, a value of a deterioration amount at the time when the length L is 0 in FIG. 8 is a deterioration amount of the beam quality $M^2$ at the time when light is made incident on the optical fiber. In FIG. 8, an example in which a deterioration amount of the beam quality $M^2$ at the time when light is made incident on the optical fiber is approximately 0.02 is illustrated. As illustrated in FIG. 8, it is seen that the deterioration amount of the beam quality of the light increases in a linear function manner with respect to the length L of the optical fiber. In the case of FIG. 8, it is seen that the deterioration amount $\Delta M^2$ of light generated when propagating in the optical fiber is calculated by subtracting approximately 0.02 from a value of the vertical axis and the deterioration amount $\Delta M^2$ of the beam quality $M^2$ of the light due to propagation in the optical fiber increases in proportion to the length of the optical fiber. Note that the deterioration amount of the beam quality $M^2$ at the time when the light is made incident on the optical fiber is, for example, when an optical fiber, in which a deterioration amount of beam quality of light propagating in the optical fiber is measured, is connected to an optical fiber for input in which light in a single mode propagates, an amount due to deterioration by connection of these optical fibers.

A relation between the propagation constant difference $\Delta\beta$ and a ratio of the length L of an optical fiber and the

deterioration amount $\Delta M^2$ of beam quality due to propagation in the optical fiber is checked using a plurality of optical fibers having different propagation constant differences $\Delta\beta$ between the light in the LP01 mode and the light in the LP11 mode. The ratio is indicated by $\Delta M^2/L$. The propagation constant differences $\Delta\beta$ of samples 1 to 12 of the optical fibers used for the measurement and the ratio $\Delta M^2/L$ between the length L and the deterioration amount $\Delta M^2$ are illustrated in Table 1 below.

TABLE 1

|  | $\Delta\beta$ | $\Delta M^2/L$ |
|---|---|---|
| Sample 1 | 1733.76 | 0.00072 |
| Sample 2 | 2088.92 | 0.00010 |
| Sample 3 | 1825.94 | 0.00061 |
| Sample 4 | 1932.45 | 0.00034 |
| Sample 5 | 1865.30 | 0.00038 |
| Sample 6 | 1797.54 | 0.00042 |
| Sample 7 | 1710.83 | 0.00075 |
| Sample 8 | 1973.44 | 0.00010 |
| Sample 9 | 1973.44 | 0.00011 |
| Sample 10 | 1938.42 | 0.00018 |
| Sample 11 | 1832.96 | 0.00050 |
| Sample 12 | 2200.00 | 0.00010 |

FIG. 9 is a diagram illustrating a relation between the propagation constant difference $\Delta\beta$ and the ratio $\Delta M^2/L$ illustrated in Table 1. As illustrated in FIG. 9, in a region where the propagation constant difference $\Delta\beta$ between the light in the LP01 mode and the light in the LP11 mode is larger than 2000 rad/m, as a result, the ratio $\Delta M^2/L$ is generally fixed. On the other hand, it is seen that, in a region where the propagation constant difference $\Delta\beta$ is 2000 rad/m or smaller, the ratio $\Delta M^2/L$ increases as the propagation constant difference $\Delta\beta$ decreases. As explained with reference to FIG. 8, the deterioration amount $\Delta M^2$ of the beam quality of the light due to propagation in the optical fiber increases in proportion to the length L of the optical fiber. Therefore, from FIG. 9, when the propagation constant difference $\Delta\beta$ is 2000 rad/m or smaller, as the propagation constant difference $\Delta\beta$ decreases, a gradient of a straight line indicating the relation between length L of the optical fiber and the difference between the beam quality $M^2$ of the incident light and the beam quality $M^2$ of the emitted light illustrated in FIG. 8 increases. Therefore, it is seen that, when the propagation constant difference $\Delta\beta$ is 2000 rad/m or smaller, as the propagation constant difference $\Delta\beta$ is smaller, the deterioration amount $\Delta M^2$ of the beam quality increases at the short length L. Accordingly, when the propagation constant difference $\Delta\beta$ is 2000 rad/m or smaller, an optical fiber having an appropriate length needs to be used in order to suppress deterioration in beam quality.

Next, the length L of the optical fiber for suppressing deterioration in beam quality is explained.

When linear approximation is performed by a method of least squares in the region where the propagation constant difference $\Delta\beta$ is 2000 rad/m or smaller in FIG. 9, a gradient is $-2.372\times10^{-6}$ and an intercept is $4.819\times10^{-3}$. Therefore, this straight line in the region where the propagation constant difference $\Delta\beta$ is 2000 rad/m or smaller can be represented by the following Expression (4).

$$\Delta M^2/L = -2.372\times10^{-6}\times\Delta\beta + 4.819\times10^{-3} \qquad \cdots (4)$$

Therefore, in the region where the propagation constant difference $\Delta\beta$ is 2000 rad/m or smaller, if the length L satisfies Expression (5) described below, a deterioration amount of beam quality due to propagation in the optical fiber can be reduced to $\Delta M^2$ or less.

$$L \leqq \frac{\Delta M^2}{-2.372\times10^{-6}\times\Delta\beta + 4.819\times10^{-3}} \qquad \cdots (5)$$

Incidentally, as explained with reference to FIG. 6, it is preferable from the viewpoint of obtaining satisfactory beam quality that the deterioration amount $\Delta M^2$ of the beam quality due to propagation in the optical fiber is 0.05 or less. Therefore, in Expression (5) described above, it is preferable that the deterioration amount $\Delta M^2$ is 0.05 or less and it is more preferable that the deterioration amount $\Delta M^2$ is 0.03 or less from the viewpoint of emitting light having more excellent beam quality. For example, if the deterioration amount $\Delta M^2$ is 0.05 or less, as explained with reference to FIG. 8, when the deterioration amount of the light at the time when the light is made incident on the optical fiber is approximately 0.02, the difference between the beam quality of the light before being made incident on the optical fiber and the beam quality of the light emitted from the optical fiber can be suppressed to approximately 0.07 or less. If the deterioration amount is approximately 0.07, the influence on light condensing performance can be suppressed. The beam quality is sufficiently high for light used in the laser device. As explained above, if the deterioration amount $\Delta M^2$ is 0.03 or less, when the deterioration amount of the light at the time when the light is made incident on the optical fiber is approximately 0.02, the difference between the beam quality of the light before being made incident on the optical fiber and the beam quality of the light emitted from the optical fiber can be suppressed to approximately 0.05. Light more excellent in the light condensing performance can be emitted.

As explained above, when the propagation constant difference $\Delta\beta$ is 2000 rad/m or smaller, the effective sectional area of the light in the LP01 mode can be increased to 390 $\mu m^2$ or more. Therefore, if the length L satisfies Expression (5) described above when the propagation constant difference $\Delta\beta$ is 2000 rad/m or smaller, it is possible to suppress deterioration in beam quality while suppressing the stimulated Raman scattering.

Therefore, it is preferable that at least one of the amplification optical fiber 10, the first optical fiber 30, and the second optical fiber 40 used in the laser device 1 in this embodiment satisfies Expression (5) described above. Further, it is more preferable that each of the amplification optical fiber 10, the first optical fiber 30, and the second optical fiber 40 satisfies Expression (5) described above. Furthermore, it is preferable that the length of a section sandwiched by the first FBG 35 and the second FBG 45 in the amplification optical fiber 10, the first optical fiber 30, and the second optical fiber 40 satisfies Expression (5) described above. Further, it is more preferable that a total length of the amplification optical fiber 10, the first optical fiber 30, and the second optical fiber 40 satisfies Expression (5) described above. In these cases as well, the deterioration amount $\Delta M^2$ is preferably 0.05 or less and more preferably 0.03 or less.

Incidentally, when the right side of Expression (5) described above is calculated, when the deterioration amount $\Delta M^2$ is 0.05, the right side exceeds 50 m between 1610.03 rad/m and 1610.04 rad/m of the propagation constant difference $\Delta\beta$ between the light in the LP01 mode and the light in the LP11 mode. When the right side of Expression (5) above is calculated, when the deterioration amount $\Delta M^2$ is 0.03, the right side exceeds 50 m between 1778.66rad/m and 1778.67rad/m of the propagation constant difference $\Delta\beta$ between the light in the LP01 mode and the light in the LP11 mode. In the laser device, the optical fiber is not often used exceeding 50 m. Therefore, it is preferable that the length L satisfies Expression (5) described above and is 50 m or less. Since a maximum of the length L is suppressed to 50 m, it is possible to further suppress the stimulated Raman scattering.

Therefore, in the laser device 1, for example, it is preferable that a maximum of the length L of at least one of the amplification optical fiber 10, the first optical fiber 30, and the second optical fiber 40 is suppressed to 50 m or less. It is more preferable that a maximum of the length L of each of the amplification optical fiber 10, the first optical fiber 30, and the second optical fiber 40 is suppressed to 50 m or less. Furthermore, it is preferable that a maximum of the length L of a section sandwiched by the first FBG 35 and the second FBG 45 in the amplification optical fiber 10, the first optical fiber 30, and the second optical fiber 40 is suppressed to 50 m or less. It is more preferable that a maximum of a total length L of the amplification optical fiber 10, the first optical fiber 30, and the second optical fiber 40 is suppressed to 50 m or less.

Note that, in the laser device 1, as explained above, the first optical fiber 30, in which the first FBG 35 is formed, is connected to one end of the amplification optical fiber 10. The second optical fiber 40, in which the second FBG 45 is formed, is connected to the other end of the amplification optical fiber 10. Therefore, it is preferable from the viewpoint of being capable of suppressing deterioration in beam quality at a connection point of the optical fiber that an electric field profile calculated from a refractive index profile of the amplification optical fiber 10 and an electric field profile calculated from a refractive index profile of the first optical fiber 30 are approximate to each other. Similarly, it is preferable that the electric field profile calculated from the refractive index profile of the amplification optical fiber 10 and an electric field profile calculated from a refractive index profile of the second optical fiber 40 are approximate to each other. For example, if combination efficiency $\alpha_e$ defined by Expression (6) described below is 0.995 or more, it is possible to suppress deterioration in the beam quality $M^2$ at a connection point of the amplification optical fiber 10 and the first optical fiber 30 or the second optical fiber 40 to approximately 0.02.

$$\alpha_e = \left( \int_0^\infty \frac{E_A(r)E_P(r)}{\sqrt{\int_0^\infty E_A(r)dr \int_0^\infty E_P(r)dr}} dr \right)^2 \qquad \cdot \cdot \cdot (6)$$

Note that r in Expression (6) described above indicates a distance in the radial direction from the center axis of the optical fiber, $E_A(r)$ indicates an electric field profile in the radial direction of the amplification optical fiber 10, and $E_P(r)$ indicates an electric field profile in the radial direction of the first optical fiber 30 or the second optical fiber 40.

As explained above, at least one of the amplification optical fiber 10, the first optical fiber 30, and the second optical fiber 40 used in the laser device 1 in this embodiment is an optical fiber in which light having at least the wavelength of 1060 nm is capable of propagating in the core at least in the LP01 mode and the LP11 mode. By satisfying Expression (5) described above, it is possible to suppress deterioration in beam quality while suppressing the stimulated Raman scattering.

(Second Embodiment)

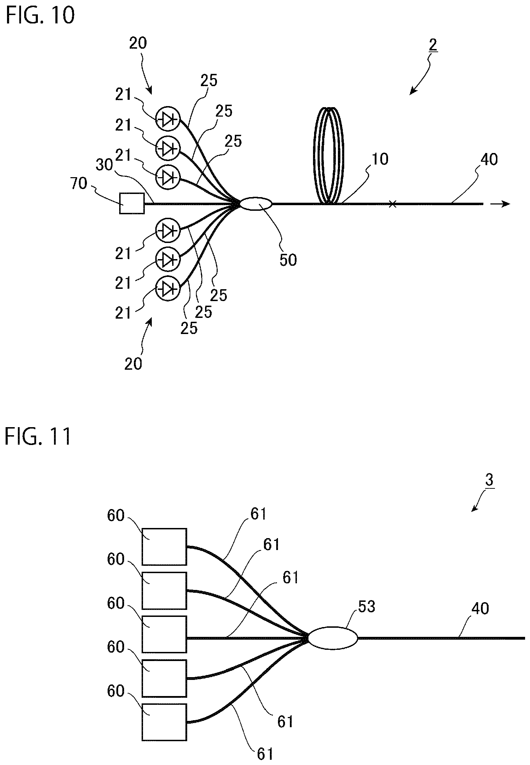

Next, a second embodiment of the present invention is explained in detail below with reference to FIG. 10. Note that components same as or equivalent to the components in the first embodiment are denoted by the same reference numerals and signs and explanation of the components is omitted except when the components are particularly explained.

FIG. 10 is a diagram illustrating a laser device according to this embodiment. As illustrated in FIG. 10, a laser device 2 in this embodiment is different from the laser device 1 in the first embodiment in that the laser device 2 is a fiber laser device of an MO-PA (Master Oscillator Power Amplifier) type. Therefore, the laser device 2 in this embodiment includes a seed light source 70.

The seed light source 70 includes, for example, a laser diode or a fiber laser and is configured to emit seed light having a wavelength of 1060 nm. The seed light source 70 is configured the same as the first optical fiber 30 in the first embodiment and connected to the first optical fiber 30 in which an FBG is not formed. The seed light emitted from the seed light source 70 propagates in a core of the first optical fiber 30.

An optical combiner 50 in this embodiment is configured the same as the optical combiner 50 in the first embodiment. Therefore, the seed light emitted from the seed light source 70 is made incident on a core 31 of an amplification optical fiber 10 via the core of the first optical fiber 30 and propagates in the core 31. As in the laser device 1 in the first embodiment, pumping lights emitted from respective laser diodes 21 of a pumping light source 20 are made incident on an inner clad 12 of the amplification optical fiber 10, propagates mainly in the inner clad 12, and pumps ytterbium added to the core 11. Accordingly, the seed light propagating in the core is amplified by stimulated emission of ytterbium changed to a pumped state. The amplified seed light is emitted from the amplification optical fiber 10 as output light. The light emitted from the amplification optical fiber 10 is emitted via a second optical fiber 40 as in the first embodiment.

In this embodiment as well, at least one of the amplification optical fiber 10, the first optical fiber 30, and the second optical fiber 40 used in the laser device 2 satisfies Expression (5) described above. Further, it is more preferable that a total length of the amplification optical fiber 10, the first optical fiber 30, and the second optical fiber 40 satisfies Expression (5) described above. In these cases as well, the deterioration amount $\Delta M^2$ is preferably 0.05 or less and more preferably 0.03 or less. Therefore, in the laser device in this embodiment as well, in an optical fiber satisfying Expression (5) described above, it is possible to suppress deterioration in beam quality to a desired range while suppressing deterioration in beam quality of emitted light. Note that it is preferable not to add a dopant to the core of the second optical fiber 40 because a threshold for optical breakage can be increased.

In this embodiment as well, it is preferable that a maximum of the length L of each of the amplification optical fiber 10, the first optical fiber 30, and the second optical fiber 40 is suppressed to 50 m. It is more preferable that a maximum of a total length L of the amplification optical fiber 10, the first optical fiber 30, and the second optical fiber 40 is suppressed to 50 m.

(Third Embodiment)

Next, a third embodiment of the present invention is explained in detail with reference to FIG. 11. Note that components same as or equivalent to the components in the first embodiment are denoted by the same reference numerals and signs and explanation of the components is omitted except when the components are particularly explained.

FIG. 11 is a diagram illustrating a laser device according to this embodiment. As illustrated in FIG. 11, a laser device 3 in this embodiment includes, as main components, a plurality of light sources 60, an optical combiner 53, and a second optical fiber 40 same as the second optical fiber in the first embodiment. Note that, in this embodiment as well, it is preferable not to add a dopant to a core of the second optical fiber 40 because a threshold for optical breakage can be increased.

The respective light sources 60 are configured as laser devices that emit lights having a wavelength of 1060 nm and configured as, for example, fiber laser devices or solid-state laser devices. When the light sources 60 are configured as the fiber laser devices, the light sources 60 are configured as fiber laser devices of a resonator type same as the fiber laser device in the first embodiment or configured as fiber laser devices of an MO-PA type same as the fiber laser device in the second embodiment.

Optical fibers 61, which propagate the lights emitted from the light sources 60, are connected to the respective light sources 60. The respective optical fibers 61 are the same as, for example, the first optical fiber 30 in the first embodiment. Therefore, the lights emitted from the respective light sources 60 propagate in the respective optical fibers 61 in a few mode.

The optical combiner 53 optically connects cores of the respective optical fibers 61 and a core of the second optical fiber 40.

In the laser device 3 in this embodiment, the lights having the wavelength of 1060 nm are emitted from the respective light sources 60. The lights are made incident on the core of the second optical fiber 40 via the respective optical fibers 61 and via the optical combiner 53. The lights are emitted from the second optical fiber 40.

In this embodiment as well, in the second optical fiber 40 used in the laser device 3, the light having the wavelength of 1060 nm is capable of propagating in the core at least in an LP01 mode and an LP11 mode. Expression (5) described above is satisfied. Further, in this embodiment as well, a deterioration amount $\Delta M^2$ is preferably 0.05 or less and more preferably 0.03 or less. Therefore, in the laser device in this embodiment as well, in an optical fiber satisfying Expression (5) described above, it is possible to suppress deterioration in beam quality to a desired range while suppressing deterioration in beam quality of emitted light.

In this embodiment as well, it is preferable that a maximum of respective length Ls of the second optical fiber 40 is suppressed to 50 m.

The present invention is explained above using the embodiments as examples. However, the present invention is not limited to the embodiments. The configurations can be changed as appropriate in a range in which the object of the present invention is achieved. That is, the optical fiber of the present invention only has to be an optical fiber in which light having a wavelength of 1060 nm is capable of propagating in a core at least in the LP01 mode and the LP11 mode and that satisfies Expression (5) described above. The other configurations can be changed as appropriate.

The optical fiber of the present invention may be used in the laser device as explained above but may be used in a device other than the laser device such as an optical amplifier.

As explained above, according to the present invention, the optical fiber and the laser device that can suppress deterioration in beam quality to a predetermined range while suppressing stimulated Raman scattering are provided. Use in a laser device and the like for machining is expected.

Reference Signs List

| | |
|---|---|
| 1, 2, 3 ... | laser device |
| 10 ... | amplification optical fiber |
| 20 ... | pumping light source |
| 30 ... | first optical fiber |
| 31 ... | core |
| 35 ... | first FBG |
| 40 ... | second optical fiber |
| 45 ... | second FBG |
| 60 ... | light source |
| 70 ... | seed light source |

**Claims**

1. An optical fiber in which light having at least a wavelength of 1060 nm is capable of propagating in a core at least in an LP01 mode and an LP11 mode, wherein
a difference $\Delta\beta$ between a propagation constant of the light in the LP01 mode and a propagation constant of the light in the LP11 mode is 2000 rad/m or smaller, and, when a deterioration amount of beam quality of light indicated by $M^2$ due to propagation in the optical fiber is represented as $\Delta M^2$, length L satisfies an expression described below.

$$L \leqq \frac{\Delta M^2}{-2.372 \times 10^{-6} \times \Delta \beta + 4.819 \times 10^{-3}}$$

2. The optical fiber according to claim 1, wherein the deterioration amount $\Delta M^2$ is 0.05 or less.

3. The optical fiber according to claim 2, wherein the deterioration amount $\Delta M^2$ is 0.03 or less.

4. The optical fiber according to any one of claims 1 to 3, wherein the length L is 50 m or less.

5. The optical fiber according to any one of claims 1 to 4, wherein at least ytterbium is added to the core.

6. A laser device comprising the optical fiber according to any one of claims 1 to 5.

FIG. 1

FIG. 2

## FIG. 3

## FIG. 4

FIG. 5

FIG. 6

PROPAGATION CONSTANT DIFFERENCE
BETWEEN LP01 MODE AND LP11 MODE (rad. /m)

FIG.7

FIG. 8

FIG. 9

FIG. 10

FIG. 11

## INTERNATIONAL SEARCH REPORT

| | International application No. |
|---|---|
| | PCT/JP2018/048371 |

A. CLASSIFICATION OF SUBJECT MATTER
Int.Cl. G02B6/036(2006.01)i, G02B6/02(2006.01)i, H01S3/067(2006.01)i

According to International Patent Classification (IPC) or to both national classification and IPC

B. FIELDS SEARCHED

Minimum documentation searched (classification system followed by classification symbols)
Int.Cl. G02B6/036, G02B6/02, H01S3/067

Documentation searched other than minimum documentation to the extent that such documents are included in the fields searched
Published examined utility model applications of Japan      1922-1996
Published unexamined utility model applications of Japan    1971-2019
Registered utility model specifications of Japan            1996-2019
Published registered utility model applications of Japan    1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 6255532 B1 (FUJIKURA LTD.) 27 December 2017, paragraphs [0025]-[0057], fig. 1, 2 & US 2018/0203186 A1, paragraphs [0029]-[0060], fig. 1, 2 & WO 2018/003184 A1 & EP 3306759 A1 & CN 107851954 A | 1, 5-6<br>2-4 |
| Y | JP 2009-116193 A (MITSUBISHI CABLE IND LTD.) 28 May 2009, paragraph [0002] (Family: none) | 2-4 |

☒ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23.01.2019 | 05.02.2019 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
|---|
| PCT/JP2018/048371 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2008-78629 A (IMRA AMERICA, INC.) 03 April 2008, paragraphs [0003]-[0007] & US 2008/0069508 A1, paragraphs [0005]-[0009] & EP 1903011 A2 | 2-4 |
| P, X | JP 2018-6596 A (FUJIKURA LTD.) 11 January 2018, entire text, all drawings & WO 2018/008251 A1 | 1-6 |
| A | WO 2013/038794 A1 (FURUKAWA ELECTRIC CO., LTD.) 21 March 2013, entire text, all drawings & US 2013/0336343 A1 | 1-6 |
| A | US 2011/0081123 A1 (INSTITUT NATIONAL D'OPTIQUE) 07 April 2011, entire text, all drawings & WO 2009/089608 A1 & CA 2712123 A1 | 1-6 |

Form PCT/ISA/210 (continuation of second sheet) (January 2015)

**EP 3 734 337 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016051859 A